# EUROPEAN PATENT SPECIFICATION

(11) **EP 4 521 092 B1**
(45) Date of publication and mention of the grant of the patent: **04.03.2026**
(21) Application number: 24465523.9
(22) Date of filing: 22.05.2024
(51) Int. Cl.: G01M 99/00

(54) **MOBILE EXPERIMENTAL STAND FOR TESTING A LINEAR STRUCTURAL ELEMENT UNDER THE ACTION OF HIGH TEMPERATURES**
MOBILER VERSUCHSSTAND ZUM TESTEN EINES LINEAREN BAUTEILS UNTER EINWIRKUNG VON HOHEN TEMPERATUREN
BANC D'ESSAI EXPERIMENTAL MOBILE POUR TESTER UN ÉLÉMENT DE CONSTRUCTION LINÉAIRE SOUS L'ACTION DE HAUTES TEMPÉRATURES

(30) Priority: 06.09.2023 RO 202300487
(43) Date of publication of application: 12.03.2025
(73) Proprietor: Universitatea Tehnica "Gheorghe Asachi" Din Iasi, 700050 Iasi (RO)
(72) Inventor: BUNEA, Georgiana, 700050 Iasi (RO); ALEXA-STRATULAT, Sergiu-Mihai, 700050 Iasi (RO)
(74) Representative: Preda, Raluca-Laura

(56) References cited:
- CN-A- 109 187 064
- US-A- 4 860 727
- US-A- 896 774

## Description

### TECHNICAL FIELD

The present invention reveals a mobile experimental stand for testing a linear structural element under the action of high temperatures, that can occur for example, during a fire, designed for obtaining a controlled environment around the structural element.

### STATE OF THE ART

For subjecting different building structural components, such as beams named also as linear structural elements, to high temperatures of approximately 600°C ÷ 800°C, several technical solutions have been found depending on the component to be analyzed. At the national level, these technical solutions focused on metallic elements (patent no. RO 93056, RO 123613, RO 86951), ceramic products (RO 92590), or they were limited up to the level of specimens (RO 84767); in all the above-mentioned cases ovens with different functions were proposed.

At the international level, ovens were proposed for testing the concrete linear structural elements, as the one presented in the patent CN110068510A, in which the specimen to be analyzed is introduced and connected to the exterior, using some intermediate elements, to a device which allows the application of some compressive actions along the structural element. For testing the underground structures comprising walls and slabs to the action of high temperatures, a stand similar to an oven has been proposed (CN209927757U), on top of which the slab and wall to be analyzed are positioned, in a T-shape. The structural elements can be loaded with the desired load. Similar to the above-mentioned invention, one other stand was proposed to assess the resistance of the beam-slab subassembly under the action of fire (CN208818579U). The structure was positioned above an oven, various constraints were applied to it using additional elements for imitating the real system, and the superior part of the slab was loaded.

US4860727A discloses a mobile rail heater and a method for expanding rails.

There are multiple disadvantages of the technical solutions described above such as:
- the stands found in the state of the art are fixed, limiting the possibility of experimenting on elements of various dimensions;
- the isolation of the structural element, either entirely (inside an oven) or partially (above an oven) obstructs its exposure to several other additional actions, such as water, immediately after testing it to high temperatures;
- they have the disadvantage of not allowing the testing on large structural elements, having a length approximately in the interval 1 m to 4 m;
- the current stands provide limited adjustability and limited configuration options depending on the needs;
- they are tedious to use and move to the testing site of the structural elements;
- currently, there is no mobile experimental stand for testing a linear structural element, having a length of approximately 1 - 4 m, to temperatures found in the interval 600° C - 800° C, which allows its adjustment both on the length and the height, at the level at which the structural element is to be tested, and which is also compact and mobile having low production costs.

### PRESENTATION OF THE TECHNICAL PROBLEM

There is a need to manufacture a mobile experimental stand for testing a linear structural element, having a length of approximately 1 m up to 4 m, to high temperatures between 600° C and 800° C, which allows an easier change in its length and height depending on the dimension of the element to be tested and the focus of the high-temperature action on a certain area of the element, also having great various configuration options depending on the testing requirements, easy to use and transport, compactness and low production costs.

### DEFINITIONS

*"Beam"* or *"linear structural element"* is to be understood as a building element or other material known in the field, made from wood, steel, reinforced concrete, composite materials...etc., usually in a prismatical shape with a length larger compared to the other dimensions, typically used to ensure the resistance of a building. The prism is a geometrical body bounded by a prismatic surface and two parallel planes that intersect its generatrix. The prismatic surface determines on the two parallel planes, two polygons called the *"bases"* of the prism. The faces of the prism distinct (different) from the bases are called the *"lateral faces"* of the prism. The segments that are cut by two lateral faces of the prism are called the *"lateral edges"* of the prism. When the lateral edges of the prism are orthogonal on the base plane, the prism is *"right"* The distance between the bases of the prism is the *"height"* of the prism. In the case of the right prism, the lateral edge is equal to the height. According to the invention, *"the central longitudinal axis"* of the beam/linear structural element/burner/burner's nozzle or any other part of the mobile experimental stand is defined as an imaginary line that passes through the centroids of the two right prism bases.

Usually, these beams or linear structural elements have a substantially regular quadrilateral prism shape (right), for example, a cuboid that has two bases or ends surfaces in the shape of a regular polygon, two *"lateral sides left, and right respectively"* and two *"faces inferior, and superior respectively".* The end surfaces or the bases of the prism/linear structural element/burner/burner's nozzle or any other part of the mobile experimental stand will be called *"anterior or front base"* and *"posterior or back base"* respectively in the context of the present invention. According to the invention, *"superior", "top"* or *"above"* will reference a first point or a side found closer to the superior side of the beam/linear structural element/burner/burner's nozzle or of any part of the mobile experimental stand relative to a second reference point, while the second point will be located *"inferior", "bottom"* or respectively *"below",* relative to the first point or to that specific side. Considering the above-written definitions, the lateral parts/faces of the beam/linear structural element/burner/burner's nozzle or any side of the mobile experimental stand will be the left and right extremities, taking into account the top and bottom parts as described above. The distance from the *"anterior or front base"* to the *"posterior or back base"* of the linear structural element/burner/burner's nozzle or of any part of the mobile experimental stand defines the "length" of the linear structural element/burner/burner's nozzle or any part of the mobile experimental stand.

The *"longitudinal axis"* passes through the beam/linear structural element/burner/burner's nozzle or any other part of the mobile experimental stand from its anterior or front end surface to its posterior or back end surface, as it is defined above or preferably, passes through at least the side of the linear structural element/burner/burner's nozzle or of any part of the mobile experimental stand, etc. comprising one of its end surfaces.
The *"central transverse axis"* of the beam/linear structural element/burner/burner's nozzle or any other part of the mobile experimental stand is defined as an imaginary line that passes through the centroid of the cross-sections along a transverse axis of the beam/linear structural element/burner/burner's nozzle or any other part of the mobile experimental stand.
The *"transverse axis"* passes through the beam/linear structural element/burner/burner's nozzle or any other part of the mobile experimental stand from left to right or from a lateral side/face to the other lateral side/face, as it is defined above and it is always orthogonal to the relevant section on the longitudinal axis.

### DESCRIPTION OF THE INVENTION

The purpose of the present invention is to overcome the above-mentioned drawbacks and this is achieved by disclosing a mobile experimental stand for testing a linear structural element, having a length of approximately 1 **-** 4 m, to high temperatures around 600° C to 800° C, as it is defined in claim 1. Advantageous embodiments of the present invention will appear from the corresponding dependent claims.

Thus, the present invention discloses a mobile experimental stand for testing a linear structural element, having a length of approximately 1 m to 4 m, to temperatures from 600° C to 800° C that comprises:
- at least one main body arranged transversally on two inferior guide rails, parallel to each other and each placed on a runway beam, the two runway beams being connected at their ends by a stiffener characterized in that each main body comprises:
- an inferior longitudinal element transversally placed on the two inferior guide rails and having installed a pair of inferior wheels with a blocking system at each end, that are configured to run on the two inferior guide rails;
- a mobile longitudinal element that connects a first end of the inferior longitudinal element with a first end of an extensible element with an adjustable length, by means of a yoke, the extensible element being connected to a second end of the inferior longitudinal element, the inferior longitudinal element, the mobile, and the extensible element forming thus a triangular profile, and the mobile element is configured to extend itself beyond said yoke for supporting a burner;
- the extensible element further comprises a subassembly mounted on a lateral surface of the extensible element for supporting each main body in a vertical position on a superior guide rail supported at its both ends by a vertical supporting element of a rail such that the extensible element can be adjusted in height for positioning each burner in a working position needed for testing the linear structural element, mounted on a supporting element.

The current invention, by overcoming the problems of the known state of the art, has multiple obvious advantages. For experimenting on beams of various dimensions, the components of the stand according to the present invention can be easily moved and replicated, such as to adapt lengthwise to the element to be analyzed or to concentrate on a specific area, depending on the purpose of the experiment. The heating of the linear elements is done through some burners connected to gas cylinders, and the mobility of the system is given by the two guide rails, on which the subassembly that supports the burner moves. The subassembly provides mobility to the burner also in the vertical direction, so that it can be positioned closer or further relative to the surface of the beam, depending on the analysis which is to be done. Other advantages of the current invention are:
- Increased mobility;
- Low production cost;
- Reduced dimensions of the subassemblies and ease of assembling these;
- Easy to transport;
- The possibility of changing the point of application of the thermal action;
- The possibility of subjecting the beam to additional actions, such as to the water action shortly after the burners were turned off...etc.

### SHORT DESCRIPTION OF THE DRAWINGS

The additional advantages together with the characteristics and possibilities of using the present invention will result from the following detailed description of the preferred embodiments of the invention, which only have an illustrative, not limiting value.
Reference is made to the accompanying drawings 1-11 that form a part hereof, in which the figures represent:
- Fig.1, perspective view of the experimental stand according to an embodiment of the experimental stand of the present invention;
- Fig. 2, front view on the longitudinal direction of an embodiment of the experimental stand of the present invention;
- Fig. 3, top view of an embodiment of the experimental stand of the present invention, by projection on the superior horizontal plane;
- Fig. 4, lateral view of an embodiment of the experimental stand of the present invention, on the transverse direction;
- Fig. 5, perspective view of the main body (A);
- Fig. 6, perspective view - detail of the extensible element (c);
- Fig. 7, perspective view - detail of the subassembly (d);
- Fig. 8, detail of the mobile connection of the main body (A);
- Fig. 9, top view of a mobile longitudinal element (b) according to an embodiment of the experimental stand of the present invention;
- Fig. 10, perspective view of a main body (A) according to an embodiment of the experimental stand of the present invention in which the activation handle of the burner (B) is located in a longitudinal slit (b1);
- Fig. 11, perspective view of a main body (A) according to an embodiment of the experimental stand of the present invention in which the burner's (B) valve for gas supply is located in a longitudinal slit (b1).

For clarity reasons, the figures describe some embodiments of the present solution, in a simplified manner.

### DETAILED DESCRIPTION OF PREFERRED EMBODIMENTS

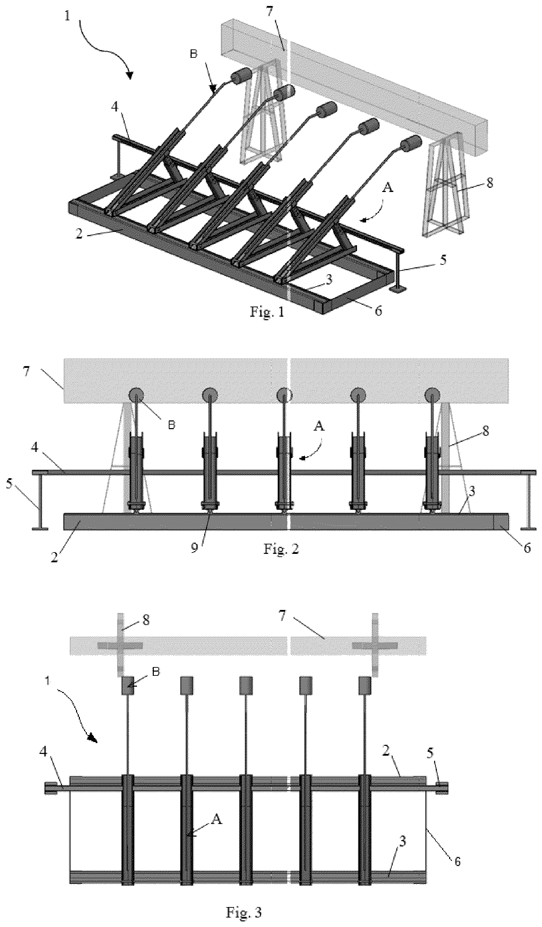

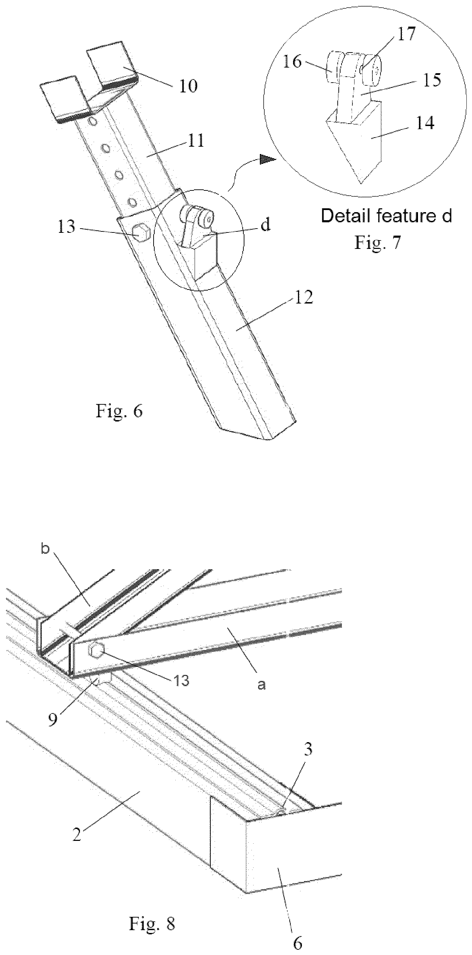

The present invention will be described with reference to the above-mentioned figures. Firstly, by reference to figures 1 - 4, a perspective view of an embodiment of the experimental stand (1) of the present invention is described for testing a linear structural element (7) having a length of approximately 1 - 4 m, tc temperatures between 600°C - 800°C. The heating of the linear element (7) is done by using one or several burners (B) connected to gas cylinders (not represented in the figures). The burner (B) can be any type of burner known in the state of the art comprising: a burner head having one or several nozzles for the flame, a burner's valve for supplying gas to the burner, an activation handle of the burner with butterfly and bow for controlling the gas flow, reduction/joint for connecting the gas cylinder and a gas hose. The stand (1) comprises at least one main body (A), arranged transversally on two inferior guide rails (3) parallel to each other and each placed on a runway beam (2), the two runway beams (2) being connected at their ends by a stiffener (6), having preferably a width of approximately 100 mm and a length of approximately 700 mm (see fig. 8). The stiffener (6) is preferably manufactured from zinc coated sheet, cold rolled, having a thickness of 2 mm, because this zinc coated sheet ensures a long-lasting resistance of the parts made from this material. The stiffener (6) is preferably configured with a fastening system at its ends, for example the flange connection systems. These kind of systems which use flanges are easy to manufacture, have a low cost and are used at a large scale. The two runway beams (2) are preferably manufactured from wood to ensure an uniform distribution of the load within the whole assembly. Most preferably, these runway beams (2) are made from glue-laminated timber (multi-layered), ideal for a long-lasting stand, with reduced weight and having a high load carrying capacity, behaving very well to vibrations. At the same time, it is extremely resistant to external factors (humidity, corrosion, fire) and has a low cost compared to other materials such as concrete or steel.
Optionally, depending on the number of main bodies (A) of the stand (1), the beams (2) can be also connected between them by one or more additional stiffeners (6) for gaining an increased stability of the stand (1). These additional stiffeners (6) are mounted at a distance of approximately 500 mm one relative to the other or relative to an adjacent stiffener (6) (not represented in the figures).

In a second preferred embodiment of the present invention, the mobile experimental stand (1) may comprise at least two main bodies (A), each main body (A) being placed at an equal distance relative to an adjacent main body (A), preferably at a distance of minimum 150 mm and maximum 400 mm. In this way, the testing of a linear structural element (7) can be done at multiple points/on multiple surfaces of interest, on its entire length. By "adjacent" relative to an element, for example relative to another main body or stiffener, in this context it must be interpreted particularly as "neighbouring" or "next to" that main body or stiffener, placed in the same plane or in parallel planes.

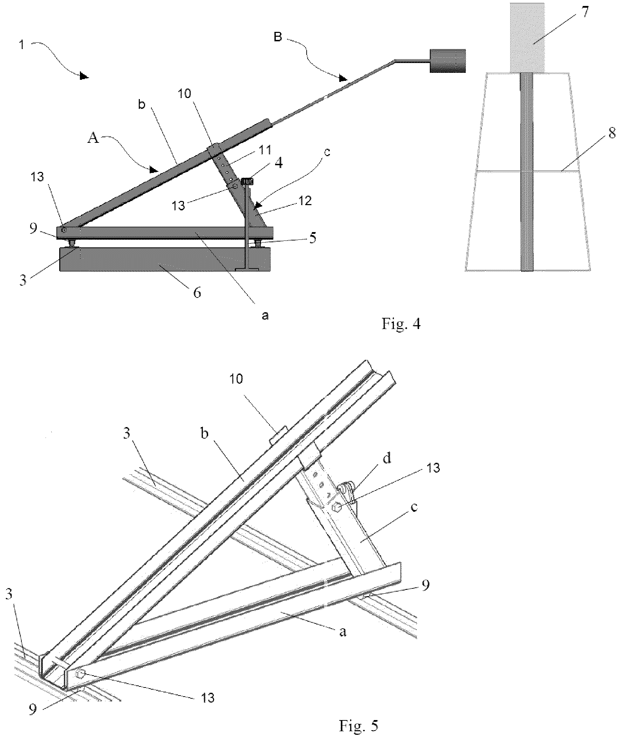

Each main body (A) comprises three basic components (see fig. 5) namely:
- **an inferior longitudinal element (a)** transversally placed on the two inferior guide rails (3) and having installed a pair of inferior wheels (9) with a blocking system at each end, that are configured to run on the two inferior guide rails (3);
- **a mobile longitudinal element (b)** that connects a first end of the inferior longitudinal element (a) with a first end of an **extensible element (c) with an adjustable length,** by means of a yoke (10). This extensible element (c) is then connected to a second end of the inferior longitudinal element (a).

The inferior longitudinal element (a), the mobile (b), and the extensible element (c) thus form a triangular profile, and the mobile element (b) is configured to extend itself beyond said yoke (10) for supporting a burner (B). The final position of the burner (B) is set by the extensible element (c) of the main body (A).

The extensible element (c) further comprises a subassembly (d) (see fig. 7) mounted on a lateral surface of the extensible element (c) for supporting each main body (A) in a vertical position on a superior guide rail (4) supported at both its ends by means of a vertical supporting element of a rail (5).

In a preferred embodiment of the present invention (see fig. 6), the extensible element (c) comprises two longitudinal metal parts (11, 12), that are made hollow, preferably having a rectangular section with a wall thickness of 1.5 mm, namely a fixed longitudinal metal part (12) and a mobile longitudinal metal part (11), that can move inside the interior of the fixed longitudinal metal part (12) and having together in an extended position a maximum length (L) in which:
- the mobile longitudinal metal part (11) is fitted with a plurality of holes along its length, equidistantly spaced relative to each other in such a way as to allow the lining up with a corresponding hole located at a superior end of the fixed longitudinal metal part (12) for fixing the extensible element (c) in a desired working position by means of a blocking element (13) that connects the corresponding holes and
- the fixed longitudinal metal part (12) further comprises a body (14) of the subassembly (d). This body (14) is mounted on the fixed longitudinal metal part (12), preferably by welding and has an element (15) provided with a hole in which an axle (17) is placed and to which a pair of superior wheels (16) are connected, that will run on the superior guide rail (4).

The maximum length (L) of the extensible element (c) is chosen preferably in the interval of approximately 350 mm and 650 mm, and the holes of the mobile longitudinal metal part (11) are equidistantly spaced relative to each other, preferably at a distance of 50 mm. The blocking element (13) can be preferably an assembly bolt-nut, sockets, rivets, gaggers, screw spindles or any other type of blocking or fixing element.
The two longitudinal metal parts (11, 12) are preferably manufactured from cold-rolled steel, because this material has precise dimensional limits, a superior quality of the surface and improved mechanical properties.

The inferior (a) and mobile (b) longitudinal elements together with the extensible element (c) are connected between them at their ends, preferably by means of some blocking elements (13). The inferior longitudinal element (a) and the mobile longitudinal element (b) are preferably cold rolled "U" profiles, made from zinc coated sheet, and most preferably from Dx51D+Z275 zinc coated sheet of 1.5 ÷ 2 mm thickness and height of 60 mm. This Z275 zinc coated sheet ensures a long-lasting resistance of the elements made from this material. The elements made from this sheet covered/treated with this degree of zinc resist very well to corrosion caused by water, snow, ice, dust, sun or other external factors and can be successfully used both at the interior and exterior. In addition, they are an excellent choice when low manufacturing and maintainance costs are required for the elements, as well as relatively high resistance. The drilling of the elements made from this material is recommended to be done by cold cutting, and the connection of these elements to be done preferably by bolts, rivets etc.

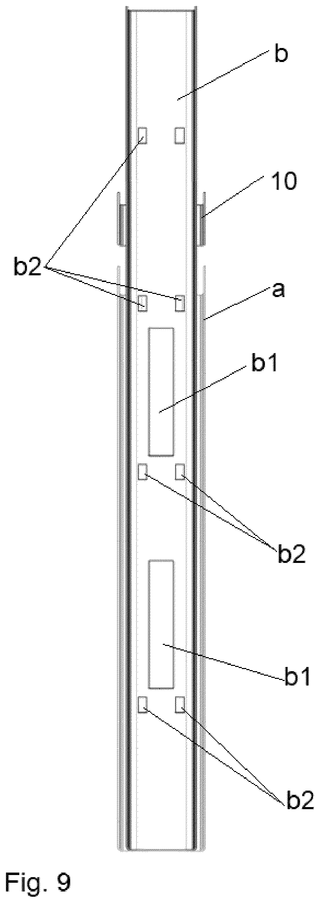

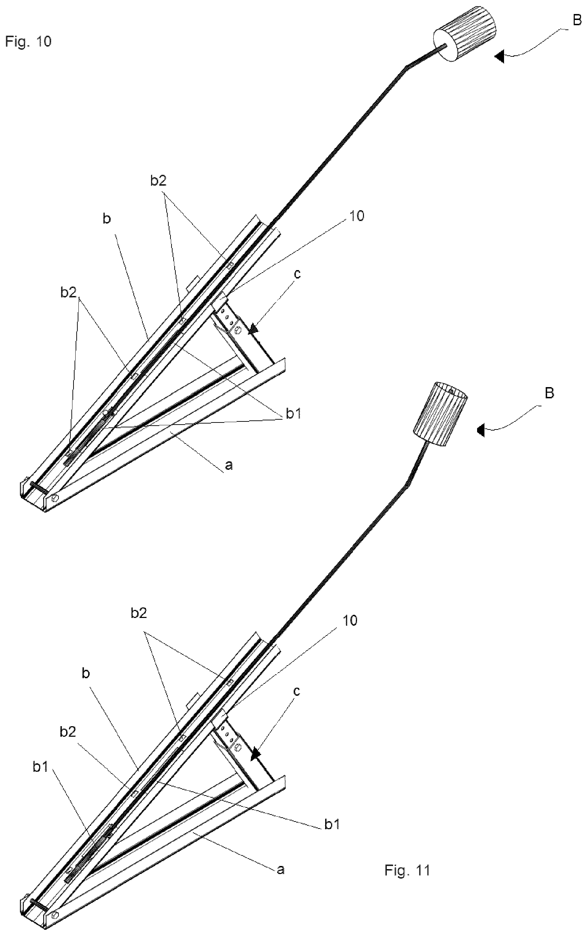

The mobile longitudinal element (b) has a length preferably chosen in the interval 700 mm and 800 mm and comprises two longitudinal slits (b1), preferably with rectangular section and placed at a distance of approximately 150 mm up to 200 mm, respectively at 350 mm up to 400 mm relative to the first end of the inferior longitudinal element (a), along the mobile longitudinal element (b) for accomodating an activation handle of the burner (B) or a burner's (B) valve for supplying gas to the burner and at least two openings (b2), preferably with a rectangular section, located on one side and on the other of each longitudinal slit (b1) for installing a fastening system of the burner (B) in a desired working position for testing the linear structural element (7), according to figure 9. The burner (B) can therefore be placed in at least two desired positions relative to the structural element (7), depending on the position of the activation handle of the burner (B) or of the burner's (B) valve for supplying gas to the burner inside one of the longitudinal slits (b1) as it is represented in figures 10-11.

Thus, when the activation handle of the burner (B) is located in a longitudinal slit (b1), the testing of the linear structural element (7), mounted on a supporting element (8), by applying heat using a nozzle of the burner (B) is done perpendicularly on a lateral side of the linear structural element (7) on a point or on a surface for heat application depending on the requirements (fig. 10). When the burner's (B) valve for supplying gas to the burner is placed in a longitudinal slit (b1), the testing of the linear structural element (7), mounted on a supporting element (8), by applying heat, is done at an angle in the interval of approximately 25 up to 45 degrees measured between a longitudinal central axis of a burner's (B) nozzle and a plane which is parallel to the left/right lateral sides of the linear structural element (7), on a point on the inferior surface of the linear structural element (7) or on an inferior surface of it depending on the requirement (fig. 11).

The fastening system of the burner (B) (either of the activation handle of the burner or of the burner's (B) valve for supplying gas to the burner, in a desired working position for testing the linear structural element (7)), is installed in the two slits (b2) located on one lateral side and on the other lateral side of each longitudinal slit (b1). This fastening system of the burner (B) can preferably be a system of loops, cogged strips, clips, clamps, heat-shrink wiring termination and fixing elements or other similar systems. These fastening systems of the burner (B) have the advantage of a fast fitting, efficiency and lower costs.

For testing at high temperatures, the main body (A) or the plurality of main bodies (A), will be fixed in the desired position using the inferior wheels with blocking system (9), that run on the two inferior guide rails (3). The extensible element (c) having an adjustable length will be fixed so that the burner (B) will reach the desired position relative to the structural element (7), as it was described above, the burner (B) being thereafter activated. The adjustment in height between the runway beams (2) and the burner (B) can be done from approximately 400 mm up to 700 mm, thus the position of the burner (B) on the vertical may be varied using the extensible element (c). Thus, the testing of the linear structural elements (7) is done at high temperatures of approximately 600° C - 800° C, having the possibility to duplicate and reposition the application points of the heat, depending on the requirements.

These and other advantages and characteristics of the present invention are best understood by any person with experience in the field, based on the current description and using the attached drawings, given as practical examples of the invention, but which must not be considered restrictive.

## Claims

1. Mobile experimental stand (1) for testing a linear structural element (7), having a length of approximately 1 m up to 4 m, to high temperatures from 600° C up to 800° C that comprises:
- at least one main body (A) arranged transversally on two inferior guide rails (3) parallel to each other and each placed on a runway beam (2), the two runway beams (2) being connected at their ends by a stiffener (6),
**characterized in that**
- each main body (A) comprises:
- an inferior longitudinal element (a) transversally placed on said two inferior guide rails (3) and having installed at each end a pair of inferior wheels (9) with a blocking system, that are configured to run on the two inferior guide rails (3);
- a mobile longitudinal element (b) that connects a first end of the inferior longitudinal element (a) with a first end of an extensible element (c) with an adjustable length, by means of a yoke (10), the extensible element (c) being connected to a second end of the inferior longitudinal element (a), the inferior longitudinal element (a), the mobile (b), and the extensible element (c) forming a triangular profile, and the mobile element (b) is configured to extend itself beyond said yoke (10) for supporting a burner (B);
- the extensible element (c) further comprises a subassembly (d) mounted on a lateral surface of the extensible element (c) for supporting each main body (A) in a vertical position on a superior guide rail (4) supported at its both ends by a vertical supporting element (5) of a rail
**such that** the extensible element (c) can be adjusted in height for positioning each burner (B) in a desired working position for testing the linear structural element (7), placed on a supporting element (8).

2. Mobile experimental stand (1) according to claim 1 **characterized in that** the extensible element (c) comprises two longitudinal metal parts (11, 12), made hollow, having a rectangular section, respectively a fixed longitudinal metal part (12) and a mobile longitudinal metal part (11), movable inside the fixed longitudinal metal part (12) and having together in an extended position a maximum length (L) in which:
- the mobile longitudinal metal part (11) is provided with a plurality of holes along its length, equidistantly spaced relative to each other in such a way as to allow the lining up with a corresponding hole located at a superior end of the fixed longitudinal metal part (12) for fixing the extensible element (c) in a desired working position by means of a blocking element (13) connecting corresponding holes;
- the fixed longitudinal metal part (12) further comprises a body (14) of the subassembly (d); said body (14) being mounted on the fixed longitudinal metal part (12) and has an element (15) provided with a hole in which an axle (17) is placed and to which a pair of superior wheels (16) are connected, that will run on the superior guide rail (4).

3. Mobile experimental stand (1) according to claim 1 or 2 **characterized in that** it comprises at least two main bodies (A), each main body (A) being placed at an equal distance relative to an adjacent main body (A), preferably at a distance of minimum 150 mm and maximum 400 mm.

4. Mobile experimental stand (1) according to any one of the previous claims **characterized in that** the maximum length (L) of the extensible element (c) is chosen preferably from approximately 350 mm to 650 mm, and the holes of the mobile longitudinal metal part (11) are equidistantly spaced relative to each other, preferably at a distance of 50 mm.

5. Mobile experimental stand (1) according to any one of the previous claims **characterized in that** the mobile longitudinal element (b) has a length preferably chosen from 700 mm up to 800 mm and comprises:
- two longitudinal slits (b1), preferably with rectangular section and placed at a distance of approximately 150 mm up to 200 mm, respectively at 350 mm up to 400 mm, relative to the first end of the inferior longitudinal element (a), along the mobile longitudinal element (b) for hosting an activation handle of the burner (B) or of a burner's (B) valve for supplying gas to the burner and
- at least two openings (b2), preferably with rectangular section, located on one side and the other of each longitudinal slit (b1) for installing a fastening system of the burner (B) in a desired working position for testing the linear structural element (7).

6. Mobile experimental stand (1) according to any one of the previous claims **characterized in that** the adjustment in height between the runway beams (2) and the burner (B) can be done from approximately 400 mm up to 700 mm.

7. Mobile experimental stand (1) according to any one of the previous claims **characterized in that** the inferior longitudinal element (a) and the mobile longitudinal element (b) are preferably cold rolled "U" profiles, made of zinc coated sheet, and most preferably from Dx51D+Z275 zinc coated sheet of 1.5 up to 2 mm thickness and height of 60 mm.

8. Mobile experimental stand (1) according to any one of the previous claims **characterized in that** the two runway beams (2) are preferably made of wood and most preferably, these runway beams (2) are made from glue-laminated timber (multi-layered).

## Patentansprüche

1. Mobiler Versuchsstand (1) zum Testen eines linearen Strukturelements (7) mit einer Länge von etwa 1 m bis zu 4 m bei hohen Temperaturen von 600 °C bis zu 800 °C, umfassend:
- mindestens einen Hauptkörper (A), der quer auf zwei unteren Führungsschienen (3) angeordnet ist, die parallel zueinander verlaufen und jeweils auf einem Laufbahnbalken (2) angebracht sind, wobei die beiden Laubahnbalken (2) an ihren Enden durch eine Versteifung (6) verbunden sind,
**dadurch gekennzeichnet, dass**
- jeder Hauptkörper (A) Folgendes umfasst:
- ein unteres Längselement (a), das quer auf den beiden unteren Führungsschienen (3) angeordnet ist und an jedem Ende ein Paar untere Räder (9) mit einem Verriegelungssystem aufweist, die dafür ausgelegt sind, auf den beiden unteren Führungsschienen (3) zu laufen;
- ein mobiles Längselement (b), das ein erstes Ende des unteren Längselements (a) mit einem ersten Ende eines ausziehbaren Elements (c) mit einstellbarer Länge mittels eines Bügels (10) verbindet, wobei das ausziehbare Element (c) mit einem zweiten Ende des unteren Längselements (a) verbunden ist, das untere Längselement (a), das mobile Element (b) und das ausziehbare Element (c) ein dreieckiges Profil bilden und das mobile Element (b) dafür ausgelegt ist, sich über den Bügel (10) hinaus zu erstrecken, um einen Brenner (B) zu tragen;
- das ausziehbare Element (c) außerdem eine Unterbaugruppe (d) umfasst, die an einer Seitenfläche des ausziehbaren Elements (c) angebracht ist, um jeden Hauptkörper (A) in einer vertikalen Position auf einer oberen Führungsschiene (4) zu stützen, die an ihren beiden Enden von einem vertikalen Stützelement (5) einer Schiene gestützt wird,
**so dass** das ausziehbare Element (c) in der Höhe verstellt werden kann, um jeden Brenner (B) in einer gewünschten Arbeitsposition zum Testen des linearen Strukturelements (7) zu positionieren, das auf einem Stützelement (8) angeordnet ist.

2. Mobiler Versuchsstand (1) gemäß Anspruch 1, **dadurch gekennzeichnet, dass** das ausziehbare Element (c) zwei langgestreckte Metallteile (11, 12) umfasst, die hohl ausgebildet sind und einen rechteckigen Querschnitt aufweisen, wobei es sich jeweils um ein feststehendes langgestrecktes Metallteil (12) und ein bewegliches langgestrecktes Metallteil (11) handelt, das innerhalb des feststehenden langgestreckten Metallteils (12) beweglich ist und zusammen mit diesem in einer ausgefahrenen Position eine maximale Länge (L) aufweist, wobei:
- das bewegliche langgestreckte Metallteil (11) entlang seiner Länge mit einer Vielzahl von Löchern versehen ist, die in gleichem Abstand voneinander angeordnet sind, so dass sie mit einem entsprechenden Loch am oberen Ende des feststehenden langgestreckten Metallteils (12) fluchten, um das ausziehbare Element (c) mittels eines die entsprechenden Löcher verbindenden Verriegelungselements (13) in einer gewünschten Arbeitsposition zu arretieren;
- das feststehende langgestreckte Metallteil (12) ferner einen Körper (14) der Unterbaugruppe (d) umfasst; wobei der Körper (14) auf dem feststehenden langgestreckten Metallteil (12) gelagert ist und ein Element (15) aufweist, das mit einem Loch versehen ist, in dem eine Achse (17) angeordnet ist und mit dem ein Paar oberer Räder (16) verbunden ist, die auf der oberen Führungsschiene (4) laufen.

3. Mobiler Versuchsstand (1) nach Anspruch 1 oder 2, **dadurch gekennzeichnet, dass** dieser mindestens zwei Hauptkörper (A) umfasst, wobei jeder Hauptkörper (A) in gleichem Abstand zu einem benachbarten Hauptkörper (A) angeordnet ist, vorzugsweise in einem Abstand von mindestens 150 mm und höchstens 400 mm.

4. Mobiler Versuchsstand (1) nach einem der vorstehenden Ansprüche, **dadurch gekennzeichnet, dass** die maximale Länge (L) des ausziehbaren Elements (c) vorzugsweise zwischen etwa 350 mm und 650 mm gewählt ist und die Löcher des beweglichen langgestreckten Metallteils (11) in gleichem Abstand zueinander angeordnet sind, vorzugsweise in einem Abstand von 50 mm.

5. Mobiler Versuchsstand (1) gemäß einem der vorhergehenden Ansprüche, **dadurch gekennzeichnet, dass** das mobile Längselement (b) eine Länge von vorzugsweise 700 mm bis 800 mm aufweist und Folgendes umfasst:
- zwei Längsschlitze (b1), vorzugsweise mit rechteckigem Querschnitt, die in einem Abstand von etwa 150 mm bis 200 mm bzw. 350 mm bis 400 mm vom ersten Ende des unteren Längselements (a) entlang des mobilen Längselements (b) angeordnet sind, um einen Betätigungsgriff des Brenners (B) oder eines Ventils eines Brenners (B) zur Gasversorgung des Brenners aufzunehmen, und
- mindestens zwei Öffnungen (b2), vorzugsweise mit rechteckigem Querschnitt, die sich auf der einen und der anderen Seite jedes Längsschlitzes (b1) befinden, um ein Befestigungssystem des Brenners (B) in einer gewünschten Arbeitsposition zum Testen des linearen Strukturelements (7) anzubringen.

6. Mobiler Versuchsstand (1) nach einem der vorstehenden Ansprüche, **dadurch gekennzeichnet, dass** die Höhenverstellung zwischen den Laufbahnbalken (2) und dem Brenner (B) von etwa 400 mm bis zu 700 mm erfolgen kann.

7. Mobiler Versuchsstand (1) nach einem der vorstehenden Ansprüche, **dadurch gekennzeichnet, dass** das untere Längselement (a) und das mobile Längselement (b) vorzugsweise kaltgewalzte U-Profile aus verzinktem Blech sind, am meisten bevorzugt aus verzinktem Blech Dx51D+Z275 mit einer Dicke von 1,5 bis 2 mm und einer Höhe von 60 mm.

8. Mobiler Versuchsstand (1) nach einem der vorstehenden Ansprüche, **dadurch gekennzeichnet, dass** die beiden Laufbahnbalken (2) vorzugsweise aus Holz hergestellt sind, wobei diese Laufbahnbalken (2) am meisten bevorzugt aus Brettschichtholz (mehrschichtig) hergestellt sind.

## Revendications

1. Banc d'essai mobile (1) pour tester un élément structurel linéaire (7), ayant une longueur d'environ 1 m à 4 m, à des températures élevées de 600 °C à 800 °C, comprenant:
- au moins un corps principal (A) disposé transversalement sur deux rails de guidage inférieurs (3) parallèles entre eux et placés chacun sur une poutre de roulement (2), les deux poutres de roulement (2) étant reliées à leurs extrémités par un renfort (6), **caractérisé en ce que**
- chaque corps principal (A) comprend:
- un élément longitudinal inférieur (a) placé transversalement sur lesdits deux rails de guidage inférieurs (3) et ayant installé à chaque extrémité une paire de roues inférieures (9) avec un système de blocage, qui sont configurées pour rouler sur les deux rails de guidage inférieurs (3);
- un élément longitudinal mobile (b) qui relie une première extrémité de l'élément longitudinal inférieur (a) à une première extrémité d'un élément extensible (c) de longueur réglable, au moyen d'un étrier (10), l'élément extensible (c) étant relié à une deuxième extrémité de l'élément longitudinal inférieur (a), l'élément longitudinal inférieur (a), l'élément mobile (b) et l'élément extensible (c) formant un profil triangulaire, et l'élément mobile (b) étant configuré pour s'étendre au-delà dudit étrier (10) afin de supporter un brûleur (B);
- l'élément extensible (c) comprend en outre un sous-ensemble (d) monté sur une surface latérale de l'élément extensible (c) pour supporter chaque corps principal (A) dans une position verticale sur un rail de guidage supérieur (4) supporté à ses deux extrémités par un élément de support vertical (5) d'un rail
**de sorte que** l'élément extensible (c) puisse être réglé en hauteur pour positionner chaque brûleur (B) dans une position de travail souhaitée pour tester l'élément structurel linéaire (7), placé sur un élément de support (8).

2. Banc d'essai mobile (1) selon la revendication 1, **caractérisé en ce que** l'élément extensible (c) comprend deux parties métalliques longitudinales (11, 12), rendues creuses, ayant une section rectangulaire, respectivement une partie métallique longitudinale fixe (12) et une partie métallique longitudinale mobile (11), mobile à l'intérieur de la partie métallique longitudinale fixe (12) et ayant ensemble, dans une position étendue, une longueur maximale (L) dans laquelle:
- la partie métallique longitudinale mobile (11) est pourvue d'une pluralité de trous sur sa longueur, espacés de manière équidistante les uns par rapport aux autres de manière à permettre l'alignement avec un trou correspondant situé à une extrémité supérieure de la partie métallique longitudinale fixe (12) pour fixer l'élément extensible (c) dans une position de travail souhaitée au moyen d'un élément de blocage (13) reliant les trous correspondants;
- la partie métallique longitudinale fixe (12) comprend en outre un corps (14) du sous-ensemble (d); ledit corps (14) étant monté sur la partie métallique longitudinale fixe (12) et comportant un élément (15) muni d'un trou dans lequel est placé un axe (17) et auquel est reliée une paire de roues supérieures (16) qui rouleront sur le rail de guidage supérieur (4).

3. Banc d'essai mobile (1) selon la revendication 1 ou 2, **caractérisé en ce qu'il** comprend au moins deux corps principaux (A), chaque corps principal (A) étant placé à une distance égale par rapport à un corps principal adjacent (A), de préférence à une distance minimale de 150 mm et maximale de 400 mm.

4. Banc d'essai mobile (1) selon l'une quelconque des revendications précédentes, **caractérisé en ce que** la longueur maximale (L) de l'élément extensible (c) est choisie de préférence entre environ 350 mm et 650 mm, et les trous de la partie métallique longitudinale mobile (11) sont espacés de manière équidistante les uns par rapport aux autres, de préférence à une distance de 50 mm.

5. Banc d'essai mobile (1) selon l'une quelconque des revendications précédentes, **caractérisé en ce que** l'élément longitudinal mobile (b) a une longueur choisie de préférence entre 700 mm et 800 mm et comprend:
- deux fentes longitudinales (b1), de préférence de section rectangulaire et placées à une distance d'environ 150 mm à 200 mm, respectivement de 350 mm à 400 mm, par rapport à la première extrémité de l'élément longitudinal inférieur (a), le long de l'élément longitudinal mobile (b) pour accueillir une poignée d'activation du brûleur (B) ou d'une vanne du brûleur (B) pour alimenter le brûleur en gaz, et
- au moins deux ouvertures (b2), de préférence de section rectangulaire, situées d'une coté et l'autre de chaque fente longitudinale (b1) pour installer un système de fixation du brûleur (B) dans une position de travail souhaitée pour tester l'élément structurel linéaire (7).

6. Banc d'essai mobile (1) selon l'une quelconque des revendications précédentes, **caractérisé en ce que** le réglage en hauteur entre les poutres de roulement (2) et le brûleur (B) peut être effectué d'environ 400 mm à 700 mm.

7. Banc d'essai mobile (1) selon l'une quelconque des revendications précédentes, **caractérisé en ce que** l'élément longitudinal inférieur (a) et l'élément longitudinal mobile (b) sont de préférence des profilés en « U » laminés à froid, fabriqués à partir de tôle revêtue de zinc, et de préférence à partir de tôle revêtue de zinc Dx51D+Z275 d'une épaisseur de 1,5 à 2 mm et d'une hauteur de 60 mm.

8. Banc d'essai mobile (1) selon l'une quelconque des revendications précédentes, **caractérisé en ce que** les deux poutres de roulement (2) sont de préférence en bois et, plus préférablement, ces poutres de roulement (2) sont en bois lamellé-collé (multicouche).
